# FASCICULE DE BREVET EUROPEEN

(11) **EP 0 595 730 B1**
(45) Date de publication et mention de la délivrance du brevet: **06.08.1997**
(21) Numéro de dépôt: 93420407.4
(22) Date de dépôt: 18.10.1993
(51) Int. Cl.: H01H 71/08, H02B 11/04, H01R 13/514

(54) **Disjoncteur à bloc de débrochage des circuits auxiliaires**
Schalter mit ausziehbaren Hilfskreisbaugruppen
Circuit-breaker with draw-out auxiliary circuit blocks

(30) Priorité: 29.10.1992 FR 9213135
(43) Date de publication de la demande: 04.05.1994
(73) Titulaire: SCHNEIDER ELECTRIC SA, 92100 Boulogne Billancourt (FR)
(72) Inventeur: Bur, Marc, F-38050 Grenoble Cédex 09 (FR); Nebon, Jean-Pierre, F-38050 Grenoble Cédex 09 (FR); Nereau, Jean-Pierre, F-38050 Grenoble Cédex 09 (FR)
(74) Mandataire: Hecké, Gérard

(56) Documents cités:
- EP-A- 0 236 179
- DE-A- 3 442 056
- FR-A- 2 624 312
- US-A- 4 121 067

## Description

L'invention est relative à un disjoncteur débrochable à boîtier moulé ayant des circuits de puissance et des circuits auxiliaires de commande et/ou de signalisation, ainsi qu'une partie fixe et une partie débrochable, chaque partie ayant des contacts d'embrochage des circuits de puissance et des contacts d'embrochage des circuits auxiliaires, qui coopèrent en position embrochée pour le raccordement des circuits de puissance et des circuits auxiliaires, ledit disjoncteur comprenant un bloc de débrochage de raccordement des circuits auxiliaires, qui a une première partie solidaire de ladite partie fixe, et une deuxième partie débrochable solidaire de ladite partie débrochable, lesquelles première et deuxième parties portent les contacts d'embrochage des circuits auxiliaires, dans lequel disjoncteur ladite partie fixe comprend un socle , des contacts d'embrochage des circuits de puissance et ladite première partie du bloc de débrochage et dans lequel ladite partie débrochable comporte un bloc disjoncteur à boîtier moulé ayant une face arrière, lesdits contacts d'embrochage des circuits de puissance et ladite deuxième partie du bloc de débrochage, fixée à ladite face arrière, la deuxième partie du bloc de débrochage des circuits auxiliaires comportant plusieurs modules juxtaposés, portant chacun un nombre donné de contacts d'embrochage, le nombre de modules étant adapté au nombre de circuits auxiliaires du disjoncteur. Un tel disjoncteur est connu du document US-A-4 121 067. Ce disjoncteur comprend aussi une platine, sur laquelle sont fixés les modules, montée avec possibilité de déplacement latérale et verticale sur la partie du bloc de débrochage solidaire de la partie fixe du disjoncteur.

Un disjoncteur débrochable du genre mentionné, permet la mise en place ou le retrait aisé du bloc disjoncteur, la connexion ou la déconnexion des circuits de puissance et des circuits auxiliaires s'effectuant automatiquement par débrochage ou embrochage. Le nombre de blocs auxiliaires associé à un disjoncteur dépend de l'installation et peut évoluer avec celle-ci, par exemple lors de l'adjonction d'un affichage à distance de la position des contacts du disjoncteur. Le nombre de circuits auxiliaires évolue en conséquence et le bloc de débrochage est, soit, dès l'origine adapté au nombre maximal de circuits auxiliaires pouvant être associé au disjoncteur, soit démontable pour être remplacé par un bloc de débrochage pour un plus grand nombre de circuits auxiliaires. L'emploi de blocs de débrochage surdimensionné est coûteux, tandis qu'une personnalisation du disjoncteur par fixation d'un bloc de débrochage adapté est généralement compliqué et nécessite un stock important de blocs de débrochage.

La présente invention a pour but de permettre la réalisation d'un disjoncteur débrochable, équipé d'un bloc de débrochage des circuits auxiliaires facilitant la personnalisation du disjoncteur lors de l'installation ou de l'évolution de l'installation. Le disjoncteur débrochable selon l'invention est caractérisé en ce qu'il comprend une platine , fixée avec un jeu élastique à ladite face arrière par au moins une vis de fixation de la platine vissée dans ladite face arrière, un manchon élastique étant intercalé entre la vis et la platine pour autoriser un mouvement limité de centrage de la platine par rapport au bloc disjoncteur, ladite platine ayant des éléments d'encliquetage pour une fixation par encliquetage de tous les modules de la deuxième partie du bloc de débrochage.

Le système modulaire du bloc de débrochage des circuits auxiliaires permet une adaptation, par adjonction ou enlèvement d'un module, au nombre de circuits auxiliaires du disjoncteur débrochable. Cette adaptation est facilitée par l'emploi d'une platine commune à l'ensemble de modules, et fixée à la face arrière du bloc disjoncteur. Les modules sont simplement encliquetés sur cette platine et ils peuvent donc être facilement mis en place ou enlevés par l'installateur lors du montage du disjoncteur. En fixant selon l'invention la platine avec un jeu élastique sur le bloc disjoncteur, on autorise un centrage automatique de l'ensemble des modules portés par la platine lors de l'embrochage, les modules étant bien entendu parfaitement positionnés sur la platine par le système d'encliquetage. La fixation élastique de la platine est obtenue par un manchon élastique intercalé entre la vis de fixation et la platine elle-même. La partie fixe du bloc de débrochage des circuits auxiliaires peut être également constituée de modules, lesquels peuvent être directement fixés d'une manière rigide au socle. Les dispositifs de connexion du bloc d'embrochage sont avantageusement d'un type standard à broches et à alvéoles, et ils comportent des pions de centrage et des bornes à vis de raccordement des conducteurs extérieurs.

D'autres avantages et caractéristiques ressortiront plus clairement de la description qui va suivre, d'un mode de mise en oeuvre de l'invention, donné à titre d'exemple et représenté aux dessins annexés dans lesquels:

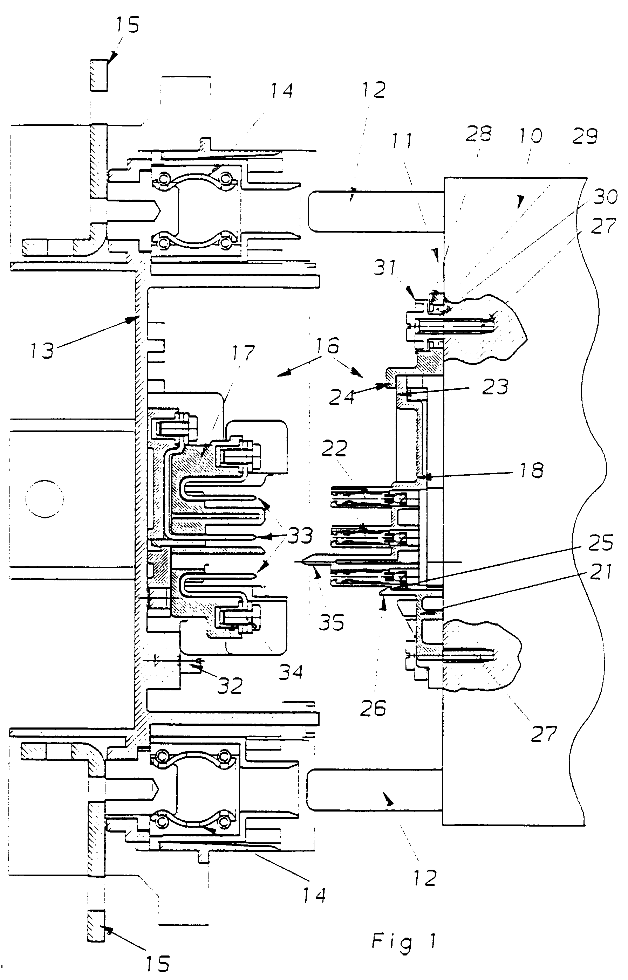

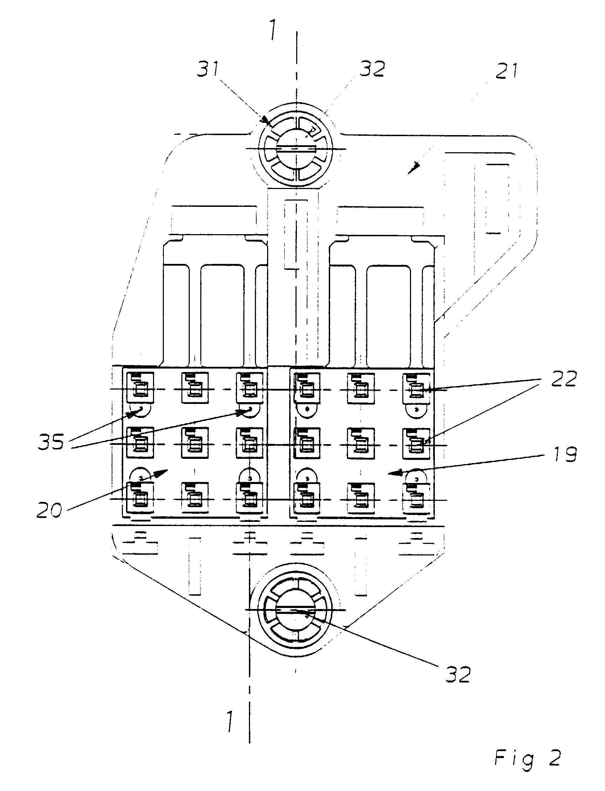

La figure 1 est une vue schématique en élévation et partiellement en coupe suivant la ligne brisée 1-1 de la figure 2 du disjoncteur débrochable selon l'invention, représenté en position débrochée.

La figure 2 est une vue de côté de la partie débrochable du bloc de débrochage selon la figure 1.

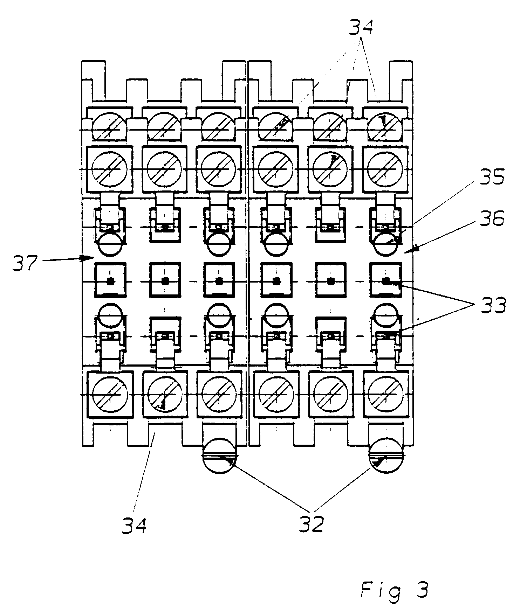

La figure 3 est une vue analogue à celle de la figure 2 montrant la partie fixe du bloc de débrochage.

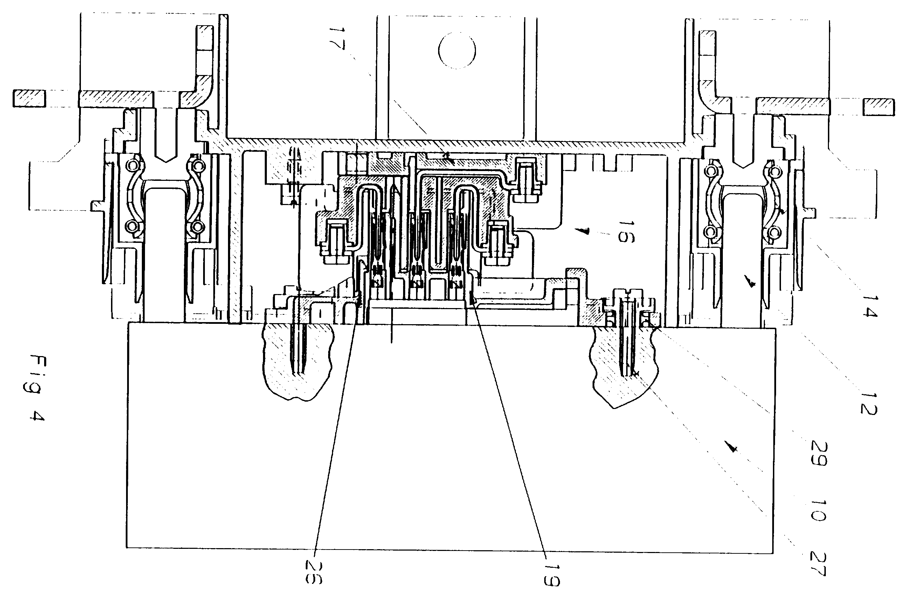

La figure 4 est une vue analogue à la figure 1 montrant le disjoncteur en position embrochée.

Sur les figures, un bloc disjoncteur 10, dont seul le boîtier moulé est esquissé, porte sur sa face arrière 11 des broches 12 des conducteurs de puissance. Le bloc disjoncteur 10 est susceptible d'être embroché sur un socle fixe 13 ou un châssis (non représenté) qui est équipé de contacts en tulipe 14 dans lesquels s'engagent les broches 12 en position embrochée du bloc disjoncteur 10, pour connecter les circuits de puissance à des plages de sortie 15 portées par le socle 13. La connexion des circuits auxiliaires du disjoncteur est réalisée par un bloc de débrochage désigné par le repère général 16. Le bloc de débrochage 16 est constitué de deux parties, une première partie 17 fixée rigidement au socle 13, et une deuxième partie conjuguée 18 portée par la face arrière 11 du bloc disjoncteur 10. Un tel disjoncteur débrochable est bien connu et l'ensemble est agencé de manière que, lors de la mise en place du bloc disjoncteur 10 par embrochage, la connexion électrique des circuits de puissance et des circuits auxiliaires s'effectue automatiquement, la déconnexion intervenant automatiquement par le mouvement inverse de débrochage du bloc disjoncteur 10.

Selon l'invention, la deuxième partie 18 du bloc d'embrochage 16 est constituée de plusieurs modules, dans l'exemple représenté de deux modules 19,20 juxtaposés sur une platine 21 fixée au bloc disjoncteur 10. Les deux modules 19,20 sont identiques et il porte chacun neuf contacts d'embrochage en alvéole. Chaque module 19,20 est fixé par encliquetage sur la platine 21, d'une part par engagement d'une languette 23 sous une butée de retenue 24 de la platine 21, et d'autre part par encliquetage d'un rebord 25 sur un crochet d'encliquetage 26 solidaire de la platine 21. Il est clair que le système d'encliquetage peut être agencé différemment, pourvu qu'il soit capable d'assurer un positionnement correct du module 19,20 sur la platine 21. La platine 21 est elle-même fixée au bloc disjoncteur 10 par deux vis 27 traversant des orifices 28 de la platine et se vissant dans la paroi du boîtier moulé du bloc disjoncteur 10. Les orifices 28 sont d'une section supérieure à celle de la vis 27 et entre le pourtour interne de l'orifice 28 et le pourtour externe de la vis 27 sont coaxialement intercalés un manchon élastique 29, par exemple en caoutchouc, et un fût 30 d'une rondelle 31 enfilée sur la vis 27. On comprend que la présence du manchon élastique 29 permette un déplacement relatif, notamment de translation de la platine 21 par rapport au bloc disjoncteur 10.

La première partie 17 du bloc de débrochage 16 est fixée par des vis 32 au socle 13 et elle comporte des broches d'embrochage 33 coopérant avec les alvéoles 22 en position embrochée du disjoncteur pour assurer la connexion des circuits auxiliaires. Les broches 33 sont reliées à des bornes à vis 34 recevant les fils de connexion extérieur du disjoncteur débrochable. Les parties 17,18 du bloc de débrochage 16 présentent des doigts ou pions 35 de centrage qui lors de l'embrochage positionnent correctement les deux parties 17,18, en provoquant le cas échéant une déformation du manchon élastique 29, afin de compenser des défauts d'alignement. La première partie 17 du bloc d'embrochage est dans l'exemple illustré par la figure, constituée de deux modules 36,37 conjugué des modules 19,20 de la deuxième partie, mais il est clair que cette première partie peut être monobloc, certains des contacts d'embrochage restant éventuellement inutilisés.

La mise en oeuvre du dispositif d'embrochage selon l'invention ressort de l'exposé précédent et il suffit de rappeler que la fixation par encliquetage des modules 19,20 peut être effectuée par l'installateur, d'une manière particulièrement simple. Le nombre de modules 19,20 installé peut être adapté au nombre de circuits auxiliaires du bloc disjoncteur, et une adaptation ultérieure, par exemple lors d'une adjonction de bloc auxiliaire additionnel, peut être réalisée par simple adjonction d'un module additionnel.

## Revendications

1. Disjoncteur débrochable à boîtier moulé ayant des circuits de puissance et des circuits auxiliaires de commande et/ou de signalisation, ainsi qu'une partie fixe et une partie débrochable, chaque partie ayant des contacts d'embrochage (12,14) des circuits de puissance et des contacts d'embrochage (22,33) des circuits auxiliaires, qui coopèrent en position embrochée pour le raccordement des circuits de puissance et des circuits auxiliaires, ledit disjoncteur comprenant un bloc de débrochage (16) de raccordement des circuits auxiliaires, qui a une première (17) partie solidaire de ladite partie fixe, et une deuxième partie (18) débrochable solidaire de ladite partie débrochable, lesquelles première (17) et deuxième (18) parties portent les contacts d'embrochage (22,33) des circuits auxiliaires, dans lequel disjoncteur ladite partie fixe comprend un socle (13), des contacts (14) d'embrochage des circuits de puissance et ladite première partie (17) du bloc de débrochage (16) et dans lequel ladite partie débrochable comporte un bloc disjoncteur à boîtier moulé (10) ayant une face arrière (11), des contacts d'embrochage (12) des circuits de puissance et ladite deuxième partie (18) du bloc de débrochage (16), fixée à ladite face arrière (11),
la deuxième partie (18) du bloc de débrochage (16) des circuits auxiliaires comportant plusieurs modules (19,20) juxtaposés, portant chacun un nombre donné de contacts (22) d'embrochage, le nombre de modules étant adapté au nombre de circuits auxiliaires du disjoncteur, caractérisé en ce qu'il comprend une platine (21), fixée avec un jeu élastique à ladite face arrière (11) par au moins une vis (27) de fixation de la platine (21) vissée dans ladite face arrière (11), un manchon élastique (29) étant intercalé entre la vis (27) et la platine (21) pour autoriser un mouvement limité de centrage de la platine (21) par rapport au bloc disjoncteur (10), ladite platine ayant des éléments d'encliquetage (25,26) pour une fixation par encliquetage de tous les modules (19,20) de la deuxième partie (18) du bloc de débrochage.

2. Disjoncteur électrique selon la revendication 1, caractérisé en ce que lesdites première (17) et deuxième (18) parties du bloc d'embrochage (16) comportent des doigts (35) de centrage pour positionner correctement lesdites parties lors de leur embrochage.

3. Disjoncteur électrique selon la revendication 1 ou 2, caractérisé en ce que la première partie (17) du bloc d'embrochage (16) comporte plusieurs modules (36,37) qui sont rigidement assujettis audit socle (13) par des vis (32) et correspondant aux modules (19,20) de la deuxième partie (18).

4. Disjoncteur électrique selon la revendication 3, caractérisé en ce que les modules (36,37) de la première partie (17) du bloc d'embrochage comportent des bornes (34) à vis de raccordement des connexions externes.

## Patentansprüche

1. Steckbarer Leistungsschalter mit Isolierstoffgehäuse, der Leistungsstromkreise und Hilfsstromkreise für Schalt- und/oder Meldefunktionen umfaßt und aus einem feststehenden Teil sowie einem steckbaren Teil besteht, wobei jeder Teil Steckkontakte (12, 14) für die Leistungsstromkreise und Steckkontakte (22, 33) für die Hilfsstromkreise aufweist, die in der eingesteckten Stellung jeweils zur Verbindung der Leistungsstromkreise bzw. der Hilfsstromkreise zusammenwirken, wobei der genannte Leistungsschalter einen Steckblock (16) zum Anschluß der Hilfsstromkreise umfaßt, welcher einen, mit dem genannten feststehenden Teil verbundenen ersten Teil (17) und einen, mit dem genannten steckbaren Teil verbundenen steckbaren zweiten Teil (18) aufweist und der genannte erste (17) und zweite Teil (18) die Steckkontakte (22, 33) der Hilfsstromkreise tragen, wobei in dem Leistungsschalter der genannte feststehende Teil einen Sockel (13), Steckkontakte (14) der Leistungsstromkreise und den genannten ersten Teil (17) des Steckblocks (16) umfaßt und der genannte steckbare Teil einen Leistungsschalterblock mit Isolierstoffgehäuse (10) aufweist, der eine Rückseite (11), die genannten Steckkontakte (12) der Leistungsstromkreise und den genannten, an der genannten Rückseite (11) befestigten zweiten Teil (18) des Steckblocks (16) umfaßt, wobei der zweite Teil (18) des steckbaren Hilfsstromkreisblocks (16) mehrere, nebeneinander angeordnete Module (19, 20) umfaßt, die jeweils eine bestimmte Anzahl von Steckkontakten (22) aufweisen und die Anzahl der Module an die Anzahl der Hilfsstromkreise des Leistungsschalters angepaßt ist,
dadurch gekennzeichnet, daß
er eine Grundplatte (21) aufweist, die an der genannten Rückseite (11) mit mindestens einer, in die genannte Rückseite (11) eingedrehte Schraube (27) zur Befestigung der Grundplatte (21) elastisch befestigt ist, wobei eine elastische Muffe (29) zwischen die Schraube (27) und die Grundplatte (21) eingesetzt ist, um eine begrenzte Zentrierbewegung der Grundplatte (21) in bezug auf den Leistungsschalterblock (10) zu ermöglichen, und die genannte Grundplatte Schnappmittel (25, 26) zur Schnappbefestigung sämtlicher Module (19, 20) des zweiten Teils (18) des Steckblocks aufweist.

2. Leistungsschalter nach Anpruch 1, dadurch gekennzeichnet, daß der genannte erste (17) und zweite Teil (18) des Steckblocks (16) Zentrierfinger (35) zur korrekten Positionierung der genannten Teile bei deren Einstecken aufweist.

3. Leistungsschalter nach Anpruch 1 oder 2, dadurch gekennzeichnet, daß der erste Teil (17) des Steckblocks (16) mehrere Module (36, 37) umfaßt, die mit Hilfe von Schrauben (32) starr am genannten Sockel (13) befestigt und den Modulen (19, 20) des zweiten Teils (18) zugeordnet sind.

4. Leistungsschalter nach Anpruch 3, dadurch gekennzeichnet, daß die Module (36, 37) des ersten Teils (17) des Steckblocks Schraubklemmen (34) zum Anschluß der äußeren Verbindungen aufweisen.

## Claims

1. A plug-in moulded case circuit breaker having power circuits and auxiliary circuits for control and/or annunciation, and also a fixed part and a plug-in part, each part having plug-in contacts (12, 14) of the power circuits and plug-in contacts (22, 33) of the auxiliary circuits, which cooperate in the plugged-in position for connection of the power circuits and auxiliary circuits, said circuit breaker comprising a plug-in unit (16) for connection of the auxiliary circuits, which has a first part (17) securedly united to said fixed part, and a second plug-in part (18) securedly united to said plug-in part, which first (17) and second (18) parts bear the plug-in contacts (22, 33) for connection of the auxiliary circuits, a circuit breaker wherein said fixed part comprises a base (13), plug-in contacts (14) for connection of the power circuits and said first part (17) of the plug-in unit (16) and wherein said plug-in part comprises a moulded case circuit breaker unit (10) having a rear panel (11), plug-in contacts (12) for connection of the power circuits and said second part (18) of the plug-in unit (16), fixed to said rear panel (11), the second part (18) of the auxiliary circuits plug-in unit (16) comprising several juxtaposed modules (19, 20), each bearing a given number of plug-in contacts (22), the number of modules being adapted to the number of auxiliary circuits of the circuit breaker, characterized in that it comprises a mounting plate (21), fixed with flexible clearance to said rear panel (11) by at least one fixing screw (27) of the mounting plate (21) screwed into said rear panel (11), a flexible sleeve (29) being inserted between the screw (27) and mounting plate (21) to allow a limited centring movement of the mounting plate (21) with respect to the circuit breaker unit (10), said mounting plate having clipping parts (25, 26) for fixing of all the modules (19, 20) of the second part (18) of the plug-in unit by clipping.

2. The electrical circuit breaker according to claim 1, characterized in that said first (17) and second (18) parts of the plug-in unit (16) comprise centring fingers (35) to position said parts correctly when the latter are plugged in.

3. The electrical circuit breaker according to claim 1 or 2, characterized in that the first part (17) of the plug-in unit (16) comprises several modules (36, 37) which are securedly united to said base (13) by screws (32) and which correspond to the modules (19, 20) of the second part (18).

4. The electrical circuit breaker according to claim 3, characterized in that the modules (36, 37) of the first part (17) of the plug-in unit comprise screw terminals (34) for connection of the extemal connections.
